# EUROPEAN PATENT SPECIFICATION

(11) **EP 1 944 955 B1**
(45) Date of publication and mention of the grant of the patent: **05.08.2009**
(21) Application number: 08100286.7
(22) Date of filing: 09.01.2008
(51) Int. Cl.: H04M 3/487, H04W 4/12, H04L 29/08

(54) **Message scheduling system**
Nachrichtenplanungssystem
Système de planification de messages

(30) Priority: 09.01.2007 GB 0700340; 16.08.2007 GB 0716001
(43) Date of publication of application: 16.07.2008
(62) Divisional of application: 08155590.6
(73) Proprietor: CVON Innovations Limited, London W1F 7BY (GB)
(72) Inventor: Ahtisaari, Marko, 00530 Helsinki (FI); Romppanen, Timo, 00530 Helsinki (FI); Fisher, Jon, London SE15 3HZ (GB); Antikainen, Ismo, 02430 Masala (FI); Aaltonen, Janne, 20900 Turku (FI)
(74) Representative: McCann, Heather Alison

(56) References cited:
- WO-A-00/62564
- US-A1- 2005 148 350
- US-A1- 2005 186 940
- US-A1- 2006 094 406
- US-A1- 2006 109 969

## Description

### Field of the Invention

The present invention relates to scheduling the transmission of messages to a subscriber in a communications network, and is particularly, but not exclusively, suited to the transmission of unsolicited messages in a mobile network.

### Background of the Invention

The transmission of messages to mobile devices is a widely used and popular service, and the major messaging types in the GSM network (Global System for Mobile Communications) are the Short Message Service (SMS) and the Multimedia Message Service (MMS). The messages are typically sent from and received by a user terminal such as mobile phone or Personal Digital Assistant (PDA). Mobile communication networks can also be used to send and receive other type of messages including electronic mail messages, voice messages, video messages, and picture messages.

Mobile marketing is widely considered by advertisers to be a significant channel for providing access to a consumer due to the fact that a mobile terminal is personal, it is "always on", and, by virtue of collaborative communications, is implicitly a member of one or more groups. These characteristics, when combined with the social networks-based marketing approach of the Internet, are seen as having the potential to form a very powerful marketing base.

Today's mobile marketing is largely based on push campaigns that are designed to opt-in a consumer, or pull campaigns that acquire mobile phone numbers from consumers. The most typical example of the pull campaign is the "text-to-win" campaign, where e.g., a soft drink bottle contains a short code and a number, and the mobile user sends the code via a text message to the number. In return, the consumer receives a notification if they have won; irrespective of the winning status, the consumer also receives selected marketing messages or a series of messages that are broadcast to the mobile terminal. Another popular method is direct advertisement, which is typically performed using text and picture messaging.

A problem with these approaches is that they do not take account of the user's activities at the time of sending the promotional message. As a result a message can be sent at a time that is inconvenient for the user, causing the recipient to ignore and delete this and any subsequently received such messages; as a result the marketing efforts are completely wasted. United States patent US6889054 describes providing a user with the means for explicitly specifying times at which they are willing to receive promotional messages, this then being used to compile an advertisement schedule for pushing advertisements to the user. However, a problem with this approach is that it is relatively burdensome on the user, since, if the schedule is to capture appropriate times to send messages based on the user's activities, the schedule requires detailed input from the user.

International patent application having publication number WO00/62564 describes a base station controller of a Radio Access Network inserting advertisements at the beginning and/or the end of a call, and thus as part of a communications event that has already been set up. Thus the insertion of advertisements is exclusively coupled to allocation/deallocation of radio resources. US patent application having publication number US2005/186940 describes scheduling delivery of messages based on recorded historical events, which are stored in a memory of a media server external to the communications system. Thus the delivery of messages is based exclusively on previously viewed events of the same type, as captured by the media server

### Summary of the Invention

In accordance with aspects of the present invention, there is provided a method of scheduling transmission of messages to a subscriber according to claim 1 and a scheduling system for scheduling transmission of messages to a subscriber according to claim 17.

Thus in embodiments of the invention, the transmission of messages is determined on the basis of communications events associated with the subscriber; typical communications events include making calls, sending messages, switching off, switching on, roaming, cell to cell handover, answering calls, and trends relating thereto. The method can include reviewing the communications events so as to identify likely actions and availability of the subscriber, and using this information to ensure that messages are received by a subscriber at a time that is convenient to their actions and availability.

In at least some arrangements the transmission of messages is determined on the basis of completed communications events, as can be established from sources such as a Home Location Register (to access network registration information), and/or a billing system (to access Call Detail Records), and/or a database storing data indicating usage of unlicensed network resources, and/or request messages sent directly from the subscriber.

The method can include selecting one or more scheduling rules on the basis of the identified communications event(s) and processing the or each selected rule on the basis thereof so as to create a schedule for use in message transmission. The scheduling rules can be dependent on any one or some of: the time of the monitored communications event; previously observed actions taken by the subscriber in response to previously transmitted messages; subscriber-specified data comprising time slots for message transmission; actions taken by elected subscribers different to the subscriber; and/or availability of network resources.

The format for the message can be selected on the basis of subscriber preferences and/or previously observed actions taken by the subscriber in response to previously transmitted messages. This aspect of the invention could be useful when the messages are promotional messages, since the objective is to maximise the probability of the subscriber paying attention, and responding to, the message.

Most conveniently the content of the message can be selected from a content storage system arranged to hold content data items and data identifying characteristics thereof. The selection process can involve correlating preferences indicated by the subscriber in relation to subject matter of interest with the characteristics of said stored content data items.

Further features and advantages of the invention will become apparent from the following description of preferred embodiments of the invention, given by way of example only, which is made with reference to the accompanying drawings.

### Brief Description of the Drawings

Figure 1 is a schematic block diagram showing a data messaging system arranged to support embodiments of the invention;
Figure 2 is a schematic block diagram showing components of a scheduling system shown in Figure 1;
Figure 3 is a timing diagram showing interactions between components of the data messaging system shown in Figure 1; and
Figure 4 is a schematic flow diagram showing steps performed by certain components of the scheduling system shown in Figure 2.

### Detailed Description of the Invention

Embodiments of the invention are concerned with monitoring communication sessions and using temporal information relating thereto in order to schedule transmission of messages. The nature of the scheduling and the criteria relating thereto is described in detail later, but first a description of the infrastructure needed to support embodiments of the invention will be presented.

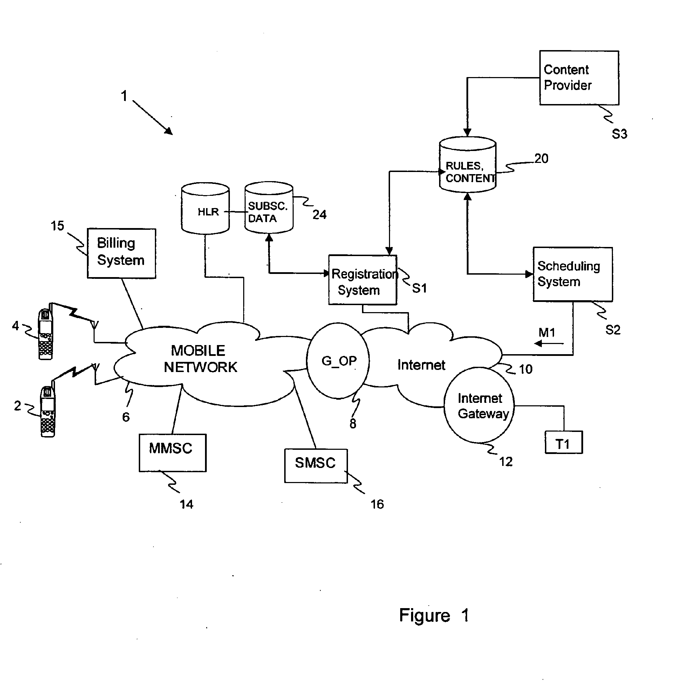

Figure 1 shows an example of a data messaging system 1 within which embodiments of the invention operate for the example of the scheduling of short message service messages (SMS); it will be appreciated that other message types, such as multimedia message service (MMS), email messages, bespoke messages in the form of GPRS data and/or streamed data and voice messages and/or streamed or downloaded video and voice messages, can alternatively be scheduled according to embodiments of the invention, and that the specific arrangement of the data messaging system 1 is dependent on the type of message being transmitted.

In the arrangement shown in Figure 1, a terminal 2 communicates with various network devices within the data messaging system 1 via the mobile network 6, which comprises: a conventional radio and switching network comprising base stations; switches (not shown) arranged in a conventional manner; and a home location register (HLR) for maintaining data relating to subscribers of the network. The mobile network 6 also comprises a billing system 15 for holding Call Detail Records (CDRs) relating to network services used by subscribers of the network 6 and store-and-forward message servers MMSC, SMSC 14, 16 configured to store and forward messages in accordance with conventional methods. The terminal 2 may be a wireless terminal such as a mobile phone or a PDA. The data messaging system 1 also comprises a WAP gateway 8, which is typically a network operator's WAP gateway, and a registration services server S1, with which a terminal T1, typically connected to the Internet 10, communicates via internet gateway 12. The terminal T1 can be e.g. a laptop computer or a personal computer fixedly attached to a network, and the registration service server S1 can be accessed by actuating a URL corresponding to the server S1. In addition the data messaging system 1 comprises content database 20, which is populated with content data from content providers such as information sources and/or advertisers and the like.

In embodiments of the invention it is assumed that the user of the terminal 2 is a subscriber of the network, and that subscribers have entered data indicative of their demographic data, preferences and interests, these data being received and stored by the registration server S 1 in the subscriber database 24. As described above, the subscriber database 24 can be associated with a HLR for the mobile network 6: in a preferred arrangement, the preference data can be stored in a logically distinct storage area to that in which the network services and subscription data are stored, thereby decoupling the storage of preference data from the storage of network services data.

Broadly speaking, embodiments of the invention comprise two related processes, each of which is performed by the scheduling server S2 in respect of individual subscribers. The first process is a monitoring process, which operates so as to identify communication events such as registration and de-registration with the mobile network 6, making calls, sending messages, switching off, switching on, roaming, cell to cell handover, answering calls, and trends relating thereto; the first process can also include analysing these events in order to derive a set of message transmission rules. In one arrangement the source of data for the monitoring process is call detail records (CDRs) maintained by the billing system 15. These CDRs typically include parameters detailing the type of network usage (voice/data) used by the subscriber, together with temporal data relating thereto (time of usage, duration of usage); these parameters are subsequently analysed as described in detail below to populate message transmission rules.

The second process is a message selection and scheduling process, in which the transmission time for messages is selected on the basis of the message transmission rules. The messages that are selected for transmission are preferably selected from the content database 20, and in one arrangement are promotional messages. The transmission time can additionally be selected on the basis of temporal preference data specified by subscribers (such as "No messages between 01:00 - 07:00") and/or preference data specified by the content providers, while the content of the promotional message is selected by matching preferred subject matter specified by subscribers with the subject matter of the promotional messages.

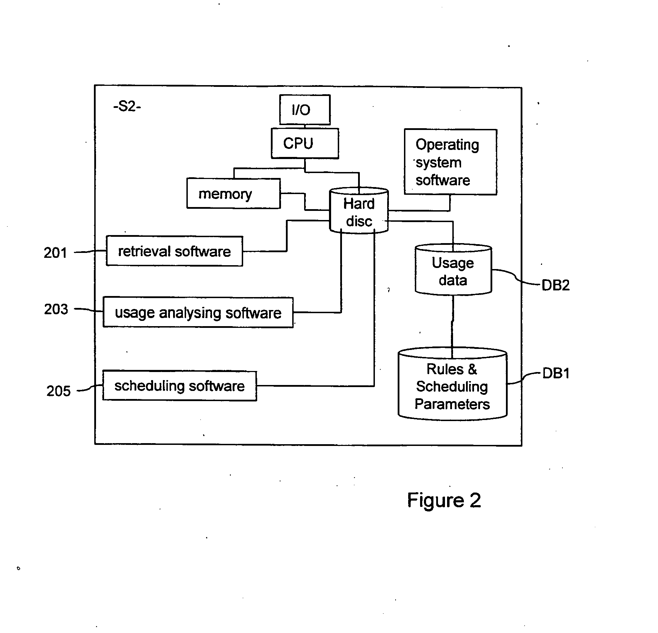

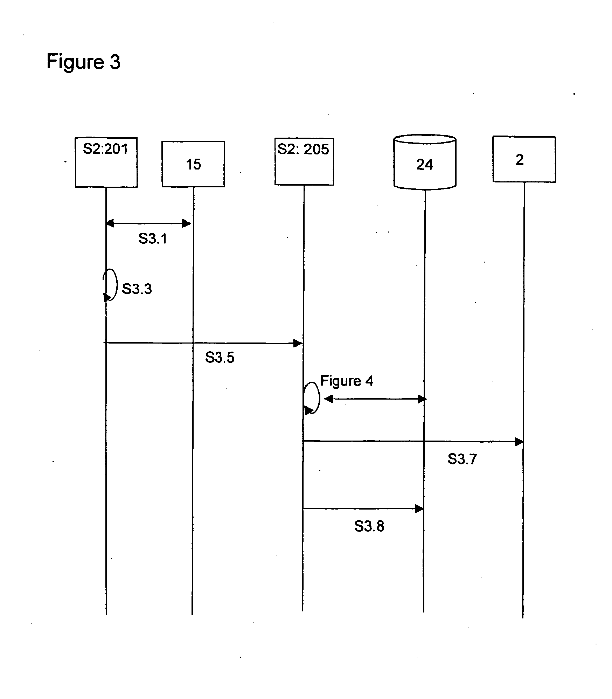

Turning now to Figures 2 and 3, the functionality of the scheduling server S2 will be described in more detail: in addition to standard CPU, memory, data bus, Input/Output ports, data storage, and operating system programs, the server S2 comprises various bespoke software components 201, 203, 205, some or all of which cooperate so as to determine a schedule for message transmission. In one arrangement messages are scheduled for transmission on the basis of historical data, while in another arrangement the scheduling server S2 operates on real-time data - in other words the server S2 queries the CDR records stored in the billing system 15 and/or subscriber records stored in the HLR in real time in order to schedule the transmission of messages.

Considering first the arrangement in which transmission is based on historical data retrieved from the billing system 15, the server S2 comprises retrieval software 201, which periodically queries the billing system 15 for CDRs, either in respect of specific subscribers or in respect of all subscribers. The retrieval software 201 processes the CDRs in order to identify time and duration of network usage, and stores the identified temporal data corresponding to each usage event in local storage DB2. Usage data corresponding to a specified period are then analysed by a usage analysing software component 203, in order to populate values of the following scheduling parameters for each subscriber:
1. Night. The definition of the "night" varies from subscriber to subscriber and from day to day: for example during the weekends one subscriber might go out to disco, party etc., which means that they will be engaging in communications until later than they do during the week, while another subscriber might work night-shifts for certain periods during a month. The value of the "night" parameter is populated as a function of day of the week, on the basis of observed communications events stored in the usage storage DB2.
2. Morning. As for "night", the value of the "morning" parameter is populated as a function of day of the week, on the basis of observed communications events stored in the usage storage DB2.
3. Busy. During certain periods of the day, the subscriber is involved in work-related communications events, which should continue uninterrupted by unsolicited messages. The value of the "busy" parameter is populated as a function of day of the week, on the basis of observed communications events stored in the usage storage DB2. It is to be noted that there might be several "busy" periods during a given day.

The values of these parameters are subsequently stored in local storage DB2 for use by the scheduling software component 205 at one or more specified scheduling times. The scheduling software component 205 can operate once or several times daily: message delivery rules R1 ... R3 described below can be processed in conjunction with temporal preference parameters, so as to draw up a schedule for message delivery for part or all of a day; for each subscriber, the schedule can subsequently be stored in the local storage areas DB1, DB2.

Considering now the second arrangement, in which transmission is based on real-time data, the retrieval software 201 periodically queries the billing system 15 for CDRs, either in respect of specific subscribers or in respect of all subscribers. However, in this arrangement, in the event that there are no on-going or completed communications events, no action is taken; in the event that communications events are on-going or have just completed, the retrieval software component 201 triggers the scheduling software component 205 to process delivery rules R1 ... R3 stored in local storage DB1.

The message delivery rules thus include a first set of rules for real-time querying of CDRs and a second set of rules for querying historical data (i.e. the usage data storage DB2). Examples of the rules are as follows:

| | **Real Time** | **Historical** |
|---|---|---|
| **R1: Night Rule** | IF night time activity observed THEN wait at least a period of X1 before sending any messages | WAIT at least ["Night" + X1] before sending any messages |
| **R2: Morning Rule** | IF no activity yet during the day then wait at least a period of X2 + activity observed before sending any messages | WAIT at least ["Morning" + X2] before sending any messages |
| **R3: Busy Rule** | IF communication session ongoing do not send advertisement; Wait X3 minutes before sending message after communication session is over | WAIT at least ["Busy" + X3] before sending any messages |

The values of X1, X2 and X3 are configurable and are stored in the usage database DB2; the value can be modified based on preference data specified by, and subsequently updated by feedback received from, the subscriber. It will be appreciated that rules R1 ... R3 are an illustrative and non-exhaustive set of rules for use in scheduling message transmission.

These rules are processed by the scheduling software component 205, which additionally checks the output of rules R1 ...R3 against temporal preference data specified by the subscriber. These temporal preference data can be embodied as parameters (PP), and can include some, or all, of the following:
- PP 1: Time of the day acceptable for receiving unsolicited messages
- PP 2: Day of the week acceptable for receiving unsolicited messages
- PP 3: Week of the month acceptable for receiving unsolicited messages
- PP 4: Month of the year acceptable for receiving unsolicited messages
- PP 5: Time delay after previous communication event before unsolicited messages can be sent (per type of event)
- PP 6: Indication that unsolicited messages should be sent only on a request basis (flag)
- PP 7: Type of communication which can include unsolicited messages
- PP 8: Communication patterns which can include unsolicited messages
- PP 9: Period of no unsolicited messages
- PP 10: Time delay between successively transmitted unsolicited messages

In the absence of input from the subscriber in respect of one or more of these temporal preference parameters, the or each parameter can be populated with a set of default values or ones used mostly by the peer group / community in which the subscriber belongs, as indicated in the subscriber's records stored in database 24.

The scheduling software component 205 also selects content for a message to be sent on the basis of a match between the content available in content database 20 and the preference data specified in subscriber database 24. The schedule can comprise a plurality of message transmission events, each corresponding to transmission of a given message and having a link to content selected from the content database 20 for the given message; when a message is due for transmission, a message M1 is created on the basis of the selected content and is transmitted to the subscriber.

In the event that messages are scheduled for delivery in real time, a plurality of schedules are generated during a day - each for immediate, or near, execution, and thus are typically held in memory until a timer equal to delay X1, X2 or X3 (as appropriate) has expired.

In addition to the temporal rules described above, the scheduling system server S2 has access to data indicative of actions taken by the terminal 2 in response to receipt of the message M1, and can use these data to determine feedback in respect of the unsolicited messages M1. The feedback can be captured via a further monitoring system (not shown), which monitors subscriber activity and correlates same with the content of the message M1. The output of the further monitoring system is then made available to the scheduling software component 205 in the form of further rules stored in the usage local data storage DB2; these include the following:
FR1. If a response is more likely immediately after SMS/MMS sending and receiving session then send message M1 as SMS/MMS;
FR2. If a response to an unsolicited message is more likely after or during certain communication event(s), then send message M1 after/during that/those event(s);
FR3. If more feedback is received in relation to message M1 during or after communication between certain parties (2 and 4), then send advertisements during/after those sessions;
FR4. Send message M1 just before actual communication message between 2 and 4 (this can be achieved by interrupting transmission of a message from 2 to 4, sending message M1, and then sending the message on to terminal 4);
FR5. Send the same or a similar message to M1 to both or all parties to a communications session after/during the communications session.

It will be appreciated that FR2 - FR5 are real-time rules, so would be actioned at the same time as processing rules R1 ... R3. Moreover, FR4 applies exclusively to ongoing communications sessions, while FR5 can be applied to messages sent between a group of subscribers.

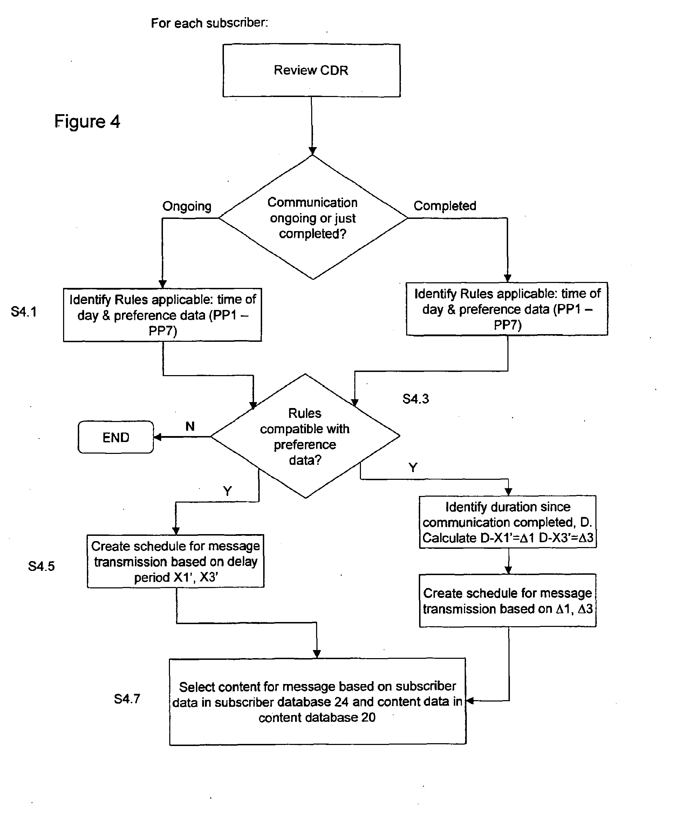

Turning to Figure 3, an example of the steps associated with the scheduling of unsolicited messages in real time and at night will now be described, in relation to rules R1, R2, R3 and preference parameters PP1 ... PP10. At step S3.1, the retrieval software component 201 queries the billing system in respect of subscribers that are currently engaged in, or who have just completed communications sessions; accordingly the retrieval software component 201 receives a plurality of CDRs, and processes the same in order to extract a) subscriber and b) current communications session or c) just-completed communications session (step S3.3). For those subscribers determined to be category (b) or (c), the retrieval software component 201 triggers operation of the scheduling software component 205 (step S3.5), which responds by splitting the received data into two groups: (b) and (c). Turning to Figure 4, for the case of a subscriber determined to be in group (b), the scheduling software component 205 identifies which of rules R1 - R3 might apply (step 4.1) and checks that the applicable rules are compatible with the preference parameters PP1 ... PP10 (step 4.3); since the process is being run at night, rule R2 is eliminated; assuming the conditions specified in preference parameters PP1, PP5, PP9 & PP10 to be satisfied, the scheduling software component 205 can then schedule transmission of a message when periods X1 and X3 have expired. If, however, one or more of the preference parameters are not satisfied, the scheduling process either ends or the scheduled time of message transmission is modified in accordance with the temporal constraints associated with a given preference parameter (e.g. in accordance with modified delay periods X1' X3': step 4.5).

Assuming message transmission to have been successfully scheduled, the scheduling software component 205 selects content for, and type of, message M1 (step 4.7) from the content database 20 on the basis of the interests and preference data stored in storage 24. In relation to format for the message M1, the scheduling software could process further rule FR1 in conjunction with message sending preference data specified by the subscriber.

Turning back to Figure 3, at the scheduled delivery time, a message M1, of the selected format and comprising the content selected at step S4.7, is transmitted to the subscriber, and the subscriber database 24 is updated to indicate the time, content and type of message transmission. This information is subsequently used in relation to preference parameters PP5 and PP10 and by the feedback system.

In relation to a subscriber for which the CDR retrieved at step S3.1 indicates completion of a communications session, the scheduling software component 205 progresses as described above, but performs the additional step of adjusting the scheduled time of message delivery to account for the amount of time that has expired since the end of the communications session.

In relation to the further rules FR1 ... FR5, the real-time embodiment implicitly satisfies the "after" versions of rules FR2, FR3 and FR5; since the "during" versions of rules FR2, FR3 and FR5 conflict with the conditions of rules R1 - R3, the further rules are preferably only applied at times of the day in which rules R1 and R2 do not apply (e.g. during the day). In relation to "Busy" rule R3, this conflicts with the "during" versions of FR2, FR3 and FR5, and the scheduling software component 205 consequently makes recourse to preference parameter PP8 so as to identify which of rules R3, or FR2/FR3 should be applied.

### Additional Details and Alternatives

The above embodiments are to be understood as illustrative examples of the invention and further arrangements are envisaged. For example in addition, or as an alternative, to scheduling the transmission of messages on the basis of communications activities, the schedule can be drawn up on the basis of subscriber-selectable settings such as "send all promotional messages at time T1"; and/or schedules can be drawn up for groups of subscribers; and/or a subscriber can elect a subscriber and specify that the schedule mirrors that of the elected subscriber; and/or a subscriber can request that all promotional messages are transmitted with a selected application or message to a messages delivery system.

In addition, whilst the above embodiments describe accessing the billing system 15 and retrieving CDRs relating to ongoing or completed communications events, the retrieval software 201 could alternatively access the HLR to determine registration status of the subscriber. In these alternative embodiments, the communications event is registration with the network, and this event can trigger generation of a schedule according to the method described above (the time of registration determining which of rules R1 and R2 might apply). In a yet further arrangement, such as one in which the user is connected to a Wireless Local Area Network (WLAN), the source of data for the monitoring process could be WLAN access login information.

The mobile network 6 can comprise any cellular network technologies which include, but are not limited to, GSM, 3^{rd} generation networks, WCDMA, CDMA and GPRS. In addition to traditional cellular networks, unlicensed networks such as Wireless Local area networks (WLAN), Bluetooth^{™} (BT) and other technologies such as WiMax, Broadcasting over DVB-H, ISDB-T and DMB can be used to deliver the scheduled messages. The terminal 2 can use the same network or another network for delivery of the messages: i.e. a hybrid network for delivery of messages and voice communications is possible.

Said scheduled messages can be delivered in efficient way using the broadcast networks to many subscribers at the same time.

The terminal 2 can be equipped with a bespoke application arranged to receive messages from a specified system according to a first schedule, and to display the message to the subscriber according to a second schedule. The second schedule can be stored locally on the terminal, or stored remotely in conjunction with the subscriber's record in database 24 and downloaded to the terminal 2. This enables message M1 to be sent in accordance with the first schedule, which is drawn up in dependence on e.g. the availability of network resources (capacity/hotspots/broadcast networks etc.), but viewed in accordance with the second schedule, which can be determined from the subscriber's preferences and availability, as described above.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of scheduling transmission of messages to a subscriber in a communications network, the communications network including a billing system (15), said billing system (15) being arranged to store Call Detail Records generated by the communications network in respect of communications events associated with the subscriber, the method comprising:
querying (S3.1) the billing system (15) for Call Detail Records generated by the communications network in respect of current or previous communications events associated with the subscriber so as to identify a type of communications event as one of a plurality of predetermined types of communications events; and
responsive to identification of said type of communications event, triggering (S3.5) a scheduling process for scheduling transmission of a message to the subscriber,
in which the scheduling process is dependent on the identified type of communications event.

2. A method according to claim 1, comprising querying of Call Detail Records generated by the communications network in respect of completed said communications events.

3. A method according to claim 1 or claim 2, further comprising querying a Home Location Register, HLR, so as to identify registration of the subscriber with the communications network, whereby to identify said type of communications event.

4. A method according to any one of the preceding claims, further comprising querying usage records associated with usage of unlicensed network resources, whereby to identify said type of communications events.

5. A method according to any one of the preceding claims, further including identifying receipt of a request message of a specified type, whereby to identify said type of communications event.

6. A method according to claim 5, in which the specified type of request message includes a message indicative of a request for synchronized transmission of a plurality of said messages that are scheduled for transmission to the subscriber.

7. A method according to claim 6, in which the scheduling process comprises scheduling the transmission of said plurality of messages to occur at the same time.

8. A method according to any one of the preceding claims, including selecting (4.1) one or more scheduling rules (R1...R3; PP1...PP10; FR1...FR5) on the basis of the type of communications event and processing (4.3, 4.5) the or each selected rule whereby to perform said scheduling process.

9. A method according to claim 8, in which at least one of said scheduling rules (R1...R3) is dependent on the time of the identified type of communications event.

10. A method according to claim 8 or claim 9, in which at least one of said scheduling rules (FR1...FR5) is dependent on previously observed actions taken by the subscriber in response to previously transmitted messages.

11. A method according to any one of claim 8 to claim 10, in which at least one of said scheduling rules (PP1...PP10) is dependent on subscriber-specified data comprising time slots for message transmission.

12. A method according to any one of claim 8 to claim 11, in which at least one of said scheduling rules is dependent on data associated with a different subscriber, said data comprising time slots for message transmission.

13. A method according to any one of the preceding claims, including selecting a message format on the basis of previously observed actions taken by the subscriber in response to previously transmitted messages.

14. A method according to any one of the preceding claims, including selecting a message format on the basis of a user profile specifying message formats.

15. A method according to any one of the preceding claims, including
accessing a content storage system (24) arranged to hold content data items and data identifying characteristics thereof, and
selecting (4.7) content data for inclusion within the message scheduled for transmission, said selection being performed on the basis of preference data specified by the subscriber and characteristics of said stored content data items.

16. A method according to any one of the preceding claims, further comprising arranging for a storage system (DB2) to hold usage records derived from said Call Detail Records associated with the communications events, at least some said usage records comprising temporal data derived from an associated Call Detail Record.

17. A scheduling system (S2) for scheduling transmission of messages to a subscriber in a communications network, the communications network comprising a billing system (15) arranged to hold Call Detail Records generated by the network, said Call Detail Records being indicative of communications sessions associated with the subscriber, the scheduling system comprising:
an interface (201) arranged to access the billing system (15) so as to access said Call Detail Records relating to current or previous communications events associated with the subscriber;
a processing system (201) arranged to identify a type of communications event from one of a plurality of predetermined types of communications events on the basis of said Call Detail Records; and
scheduling means (205) arranged to schedule transmission of a message to the subscriber in dependence on the identified type of communications event.

18. A scheduling system (S2) according to claim 17, including a further storage system (DB1) arranged to hold one or more scheduling rules (R1...R3; PP1...PP10; FR1...FR5) for use in scheduling the transmission of said message.

19. A scheduling system (S2) according to claim 18, in which at least one of said scheduling rules (R1...R3) is dependent on the time of the identified communications event.

20. A scheduling system (S2) according to claim 18 or claim 19, in which at least one of said scheduling rules (FR1...FR5) is dependent on previously observed actions taken by the subscriber in response to previously transmitted messages.

21. A scheduling system (S2) according to claim 18 or claim 19, in which at least one of said scheduling rules (PP1...PP10) is dependent on subscriber-specified data comprising time slots for message transmission.

22. A scheduling system (S2) according to any one of claim 18 to claim 21, in which at least one of said scheduling rules is dependent on data associated with a different subscriber, said data comprising time slots for message transmission.

23. A scheduling system (S2) according to any one of claim 17 to claim 22, the scheduling system being for use with a further storage system (DB2) arranged to hold usage records derived from said Call Detail Records associated with the communications events, at least some said usage records comprising temporal data derived from an associated Call Detail Record.

24. A scheduling system (S2) according to any one of claim 17 to claim 23, further comprising a content storage system (24) arranged to hold content data items and data identifying characteristics thereof,
wherein the scheduling system (S2) is arranged to select content data for inclusion within the message scheduled for transmission, said selection being performed on the basis of preference data specified by the subscriber and characteristics of said stored content data items.

25. A computer program, or a suite of computer programs, comprising computer code means adapted to perform the steps of the method of any one of claim 1 to claim 16 when said program is run on a computer or on a suite of computers.

26. A computer readable medium comprising the computer program of claim 25.

## Patentansprüche

1. Verfahren der Ablaufplanung einer Übertragung von Nachrichten zu einem Teilnehmer in einem Kommunikationsnetz, wobei das Kommunikationsnetz ein Abrechnungssystem (15) enthält, wobei das Abrechnungssystem (15) ausgestaltet ist zum Speichern von durch das Kommunikationsnetz in Bezug auf den Teilnehmer betreffende Kommunikationsereignisse erzeugte Kommunikationsdatensätze (Call Detail Records), wobei das Verfahren umfasst:
Abfragen (S3.1) des Abrechungssystems (15) hinsichtlich durch das Kommunikationsnetz in Bezug auf aktuelle oder vorherige, den Teilnehmer betreffende Kommunikationsereignisse erzeugte Kommunikationsdatensätze, um einen Kommunikationsereignistyp als einen aus einer Vielzahl vorbestimmter Kommunikationsereignistypen zu identifizieren; und
Auslösen (S3.5) eines Ablaufplanungsprozesses im Ansprechen auf eine Identifizierung des Kommunikationsereignistyps, zur Ablaufplanung einer Übertragung einer Nachricht an den Teilnehmer,
wobei der Ablaufplanungsprozess von dem identifizierten Kommunikationsereignistyp abhängig ist.

2. Verfahren nach Anspruch 1, umfassend Abfragen von durch das Kommunikationsnetz in Bezug auf abgeschlossene Kommunikationsereignisse erzeugte Kommunikationsdatensätze.

3. Verfahren nach Anspruch 1 oder Anspruch 2, des weiteren umfassend Abfragen eines Heimatregisters (Home Location Register), HLR, um eine Registrierung des Teilnehmers in dem Kommunikationsnetz zu identifizieren, wodurch der Kommunikationsereignistyp identifiziert wird.

4. Verfahren nach einem der vorhergehenden Ansprüche, des weiteren umfassend Abfragen von auf die Benutzung nicht lizenzierter Netzressourcen bezogenen Nutzungsaufzeichnungen, wodurch der Kommunikationsereignistyp identifiziert wird.

5. Verfahren nach einem der vorhergehenden Ansprüche, des weiteren enthaltend Identifizieren eines Empfangs einer Anfragenachricht eines spezifizierten Typs, wodurch der Kommunikationsereignistyp identifiziert wird.

6. Verfahren nach Anspruch 5, wobei der spezifizierte Typ der Anfragenachricht eine Nachricht enthält, die eine Anfrage nach einer synchronisierten Übertragung einer Vielzahl der zur Übertragung zu dem Teilnehmer geplanten Nachrichten anzeigt.

7. Verfahren nach Anspruch 6, wobei der Ablaufplanungsprozess eine Ablaufplanung der Übertragung der Vielzahl von Nachrichten dergestalt umfasst, dass sie zum gleichen Zeitpunkt stattfindet.

8. Verfahren nach einem der vorhergehenden Ansprüche, enthaltend Auswählen (4.1) einer oder mehrerer Ablaufplanungsregeln (R1...R3; PP1...PP10; FR1...FR5) auf Grundlage des Kommunikationsereignistyps und Verarbeiten (4.3, 4.5) der oder jeder ausgewählten Regel, wodurch der Ablaufplanungsprozess durchgeführt wird.

9. Verfahren nach Anspruch 8, wobei zumindest eine der Ablaufplanungsregeln (R1...R3) vom Zeitpunkt des identifizierten Kommunikationsereignistyps abhängig ist.

10. Verfahren nach Anspruch 8 oder Anspruch 9, wobei zumindest eine der Ablaufplanungsregeln (FR1...FR5) von zuvor beobachteten, von dem Teilnehmer im Ansprechen auf zuvor übertragene Nachrichten vorgenommenen Aktionen abhängig ist.

11. Verfahren nach einem der Ansprüche 8 bis 10, wobei zumindest eine der Ablaufplanungsregeln (PP1...PP10) von teilnehmerspezifizierten Daten, die Zeitschlitze zur Nachrichtenübertragung umfassen, abhängig ist.

12. Verfahren nach einem der Ansprüche 8 bis 11, wobei zumindest eine der Ablaufplanungsregeln von einen anderen Teilnehmer betreffenden Daten abhängig ist, wobei die Daten Zeitschlitze zur Nachrichtenübertragung umfassen.

13. Verfahren nach einem der vorhergehenden Ansprüche, enthaltend Auswählen eines Nachrichtenformats auf Grundlage zuvor beobachteter, von dem Teilnehmer im Ansprechen auf zuvor übertragene Nachrichten vorgenommener Aktionen.

14. Verfahren nach einem der vorhergehenden Ansprüche, enthaltend Auswählen eines Nachrichtenformates auf Grundlage eines Nachrichtenformate spezifizierenden Benutzerprofils.

15. Verfahren nach einem der vorhergehenden Ansprüche, enthaltend
Zugreifen auf ein Inhaltsspeichersystem (24) ausgestaltet zum Beibehalten von Inhaltsdatenelementen und deren Eigenschaften identifizierende Daten, und
Auswählen (4.7) von Inhaltsdaten zum Aufnehmen in die zur Übertragung eingeplante Nachricht, wobei die Auswahl auf Grundlage von durch den Teilnehmer spezifizierten Präferenzdaten und Eigenschaften der gespeicherten Inhaltsdatenelemente durchgeführt wird.

16. Verfahren nach einem der vorhergehenden Ansprüche, des weiteren umfassend Ausgestalten eines Speichersystems (DB2) zum Beibehalten von aus den mit den Kommunikationsereignissen verknüpften Kommunikationsdatensätzen hergeleiteten Nutzungseinträgen, wobei zumindest einige der Nutzungseinträge von einem zugehörigen Kommunikationsdatensatz hergeleitete temporäre Daten umfassen.

17. Ablaufplanungssystem (S2) zur Ablaufplanung einer Übertragung von Nachrichten zu einem Teilnehmer in einem Kommunikationsnetz, wobei das Kommunikationsnetz ein zum Beibehalten von durch das Netz erzeugten Kommunikationsdatensätzen (Call Detail Records) ausgestaltetes Abrechnungssystem (15) umfasst, wobei die Kommunikationsdatensätze den Teilnehmer betreffende Kommunikationssitzungen angeben, wobei das Ablaufplanungssystem umfasst:
eine Schnittstelle (201) ausgestaltet zum Zugreifen auf das Abrechnungssystem (15), um auf die auf Aktuelle oder vorherige, den Teilnehmer betreffende Kommunikationsereignisse bezogenen Kommunikationsdatensätze zuzugreifen;
ein Verarbeitungssystem (201) ausgestaltet zum Identifizieren eines Kommunikationsereignistyps aus einem oder einer Vielzahl vorbestimmter Kommunikationsereignistypen auf Grundlage der Kommunikationsdatensätze; und;
eine Ablaufplanungseinrichtung (205) ausgestaltet zum Einplanen einer Übertragung einer Nachricht an den Teilnehmer in Abhängigkeit des identifizierten Kommunikationsereignistyps.

18. Ablaufplanungssystem (S2) nach Anspruch 17, enthaltend ein weiteres Speichersystem (DB1) ausgestaltet zum Beibehalten einer oder mehrerer Ablaufplanungsregeln (R1...R3; PP1...PP10; FR1...FR5) zur Verwendung bei der Ablaufplanung der Übertragung der Nachricht.

19. Ablaufplanungssystem (S2) nach Anspruch 18, wobei zumindest eine der Ablaufplanungsregeln (R1...R3) vom Zeitpunkt des identifizierten Kommunikationsereignisses abhängig ist.

20. Ablaufplanungssystem (S2) nach Anspruch 18 oder Anspruch 19, wobei zumindest eine der Ablaufplanungsregeln (FR1...FR5) von zuvor beobachteten, durch den Teilnehmer im Ansprechen auf zuvor übertragene Nachrichten vorgenommenen Aktionen abhängig ist.

21. Ablaufplanungssystem (S2) nach Anspruch 18 oder Anspruch 19, wobei zumindest eine der Ablaufplanungsregeln (PP1...PP10) von teilnehmerspezifischen Daten abhängig ist, die Zeitschlitze zur Nachrichtenübertragung umfassen.

22. Ablaufplanungssystem (S2) nach einem der Ansprüche 18 bis 21, wobei zumindest eine der Ablaufplanungsregeln von einen anderen Teilnehmer betreffenden Daten abhängig ist, wobei die Datenzeitschlitze zur Nachrichtenübertragen umfassen.

23. Ablaufplanungssystem (S2) nach einem der Ansprüche 17 bis 22, wobei das Ablaufplanungssystem zur Verwendung mit einem weiteren Speichersystem (DB2) vorgesehen ist, das ausgeschaltet ist zum Beibehalten von aus den auf die Kommunikationsereignisse bezogenen Kommunikationsdatensätzen hergeleiteten Nutzungseinträgen, wobei zumindest einige der Nutzungseinträge aus einem zugehörigem Kommunikationsdatensatz hergeleitete temporäre Daten umfasst.

24. Ablaufplanungssystem (S2) nach einem der Ansprüche 17 bis 23, des weiteren umfassend ein Inhaltsspeichersystem (24) ausgestaltet zum Beibehalten von Inhaltsdatenelementen und deren Eigenschaften identifizierenden Daten,
wobei das Ablaufplanungssystem (S2) ausgeschaltet ist zum Auswählen von Inhaltsdaten zur Aufnahme in die für eine Übertragung eingeplante Nachricht, wobei die Auswahl durchgeführt wird auf Grundlage von durch den Teilnehmer spezifizierten Präferenzdaten und Eigenschaften der gespeicherten Inhaltsdatenelemente.

25. Computerprogramm oder Gruppe von Computerprogrammen, umfassend Computer-Code-Mittel ausgestaltet zum Durchführen der Schritte des Verfahrens nach einem der Ansprüche 1 bis 16, wenn das Programm auf einem Computer oder einer Gruppe von Computern abläuft.

26. Computerlesbares Medium mit dem Computerprogramm nach Anspruch 25.

## Revendications

1. Système de planification de transmission de messages à un abonné dans un réseau de communication, le réseau de communication comprenant un système de facturation (15), ledit système de facturation (15) étant agencé pour mémoriser des enregistrements de détails d'appels générés par le réseau de communication en ce qui concerne des événements de communication associés à l'abonné, le procédé comprenant les étapes consistant à :
interroger (S3.1) le système de facturation (15) pour des enregistrements de détails d'appels générés par le réseau de communication en ce qui concerne des événements de communication actuels ou précédents associés à l'abonné de manière à identifier un type d'événement de communication en tant qu'un d'une pluralité de types d'événements de communication ; et
en réponse à l'identification dudit type d'événement de communication, déclencher (S3.5) un processus de planification pour planifier la transmission d'un message à l'abonné,
dans lequel le processus de planification dépend du type identifié d'événement de communication.

2. Procédé selon la revendication 1, comprenant l'étape consistant à interroger des enregistrements de détails d'appels générés par le réseau de communication en ce qui concerne lesdits événements de communication terminés.

3. Procédé selon la revendication 1 ou 2, comprenant en outre l'étape consistant à interroger un registre d'emplacement de base, HLR, de manière à identifier l'enregistrement de l'abonné auprès du réseau de communication pour identifier ledit type d'événement de communication.

4. Procédé selon l'une quelconque des revendications précédentes, comprenant en outre l'étape consistant à interroger des enregistrements d'utilisation associés à l'utilisation de ressources de réseau sans licence, de manière à identifier ledit type d'événement de communication.

5. Procédé selon l'une quelconque des revendications précédentes, comprenant en outre l'étape consistant à identifier la réception d'un message de demande d'un type spécifié, de manière à identifier ledit type d'événement de communication.

6. Procédé selon la revendication 5, dans lequel le type spécifié de message de demande comprend un message indicatif d'une demande de transmission synchronisée d'une pluralité desdits messages dont la transmission à l'abonné est planifiée.

7. Procédé selon la revendication 6, dans lequel le processus de planification comprend l'étape consistant à planifier la transmission de ladite pluralité de messages pour qu'elle intervienne au même moment.

8. Procédé selon l'une quelconque des revendications précédentes, comprenant les étapes consistant à sélectionner (4.1) une ou plusieurs règles de planification (R1...R3 ; PP1...PP10 ; FR1...FR5) sur la base du type d'événement de communication et traiter (4.3, 4.5) la règle sélectionnée ou chaque règle sélectionnée de manière à effectuer ledit processus de planification.

9. Procédé selon la revendication 8, dans lequel au moins l'une desdites règles de planification (R1...R3) dépend du temps du type identifié d'événement de communication.

10. Procédé selon la revendication 8 ou 9, dans lequel au moins l'une desdites règles de planification (FR1...FR5) dépend d'actions précédemment observées prises par l'abonné en réponse à des messages précédemment transmis.

11. Procédé selon l'une quelconque des revendications 8 à 10, dans lequel au moins l'une desdites règles de planification (PP1...PP10) dépend de données spécifiées par l'abonné comprenant des intervalles de temps pour la transmission de messages.

12. Procédé selon l'une quelconque des revendications 8 à 11, dans lequel au moins l'une desdites règles de planification dépend de données associées à un abonné différent, lesdites données comprenant des intervalles de temps pour la transmission de messages.

13. Procédé selon l'une quelconque des revendications précédentes, comprenant l'étape consistant à sélectionner un format de messages sur la base d'actions précédemment observées prises par l'abonné en réponse à des messages précédemment transmis.

14. Procédé selon l'une quelconque des revendications précédentes, comprenant l'étape consistant à sélectionner un format de messages sur la base d'un profil d'utilisateur spécifiant des formats de messages.

15. Procédé selon l'une quelconque des revendications précédentes, comprenant les étapes consistant à :
accéder à un système de mémorisation de contenu (24) agencé pour maintenir des éléments de données de contenu et des données identifiant des caractéristiques de ceux-ci, et
sélectionner (4.7) des données de contenu à inclure dans le message dont la transmission est planifiée, ladite sélection étant effectuée sur la base de données de préférence spécifiées par l'abonné et de caractéristiques desdits éléments de données de contenu mémorisés.

16. Procédé selon l'une quelconque des revendications précédentes, comprenant en outre l'étape consistant à agencer un système de mémorisation (DB2) pour maintenir des enregistrements d'utilisation dérivés desdits enregistrements de détails d'appels associés aux événements de communication, au moins certains desdits enregistrements d'utilisation comprenant des données temporales dérivées d'un enregistrement de détails d'appels associé.

17. Système de planification (S2) pour planifier la transmission de messages à un abonné dans un réseau de communication, le réseau de communication comprenant un système de facturation (15) agencé pour maintenir des enregistrements de détails d'appels générés par le réseau, lesdits enregistrements de détails d'appels étant indicatifs de sessions de communication associées à l'abonné, le système de planification comprenant :
une interface (201) agencée pour accéder au système de facturation (15) de manière à accéder aux dits enregistrements de détails d'appels en ce qui concerne des événements de communication actuels ou précédents associés à l'abonné ;
un système de traitement (201) agencé pour identifier un type d'événement de communication à partir d'un d'une pluralité de types prédéterminés d'événements de communication sur la base desdits enregistrements de détails d'appels ; et
des moyens de planification (205) agencés pour planifier la transmission d'un message à l'abonné en fonction du type identifié d'événement de communication.

18. Système de planification (S2) selon la revendication 17, comprenant en outre un système de mémorisation (DB1) agencé pour maintenir une ou plusieurs règles de planification (R1...R3 ; PP1...PP10 ; FR1...FR5) à utiliser dans la planification de la transmission dudit message.

19. Système de planification (S2) selon la revendication 18, dans lequel au moins l'une desdites règles de planification (R1...R3) dépend du temps de l'événement de communication identifié.

20. Système de planification (S2) selon la revendication 18 ou 19, dans lequel au moins l'une desdites règles de planification (FR1...FR5) dépend d'actions précédemment observées prises par l'abonné en réponse à des messages précédemment transmis.

21. Système de planification (S2) selon la revendication 18 ou 19, dans lequel au moins l'une desdites règles de planification (PP1...PP10) dépend de données spécifiées par l'abonné comprenant des intervalles de temps pour la transmission de messages.

22. Système de planification (S2) selon l'une quelconque des revendications 18 à 21, dans lequel au moins l'une desdites règles de planification dépend de données associées à un abonné différent, lesdites données comprenant des intervalles de temps pour la transmission de messages.

23. Système de planification (S2) selon l'une quelconque des revendications 17 à 22, le système de planification étant destiné à être utilisé avec un autre système de mémorisation (DB2) agencé pour maintenir des enregistrements d'utilisation dérivés desdits enregistrements de détails d'appels associés aux événements de communication, au moins certains desdits enregistrements d'utilisation comprenant des données temporales dérivées d'un enregistrement de détails d'appels associé.

24. Système de planification (S2) selon l'une quelconque des revendications 17 à 23, comprenant en outre un système de mémorisation de contenu (24) agencé pour maintenir des éléments de données de contenu et des données identifiant des caractéristiques de ceux-ci,
dans lequel le système de planification (S2) est agencé pour sélectionner des données de contenu à inclure dans le message dont la transmission est planifiée, ladite sélection étant effectuée sur la base de données de préférence spécifiées par l'abonné et de caractéristiques desdits éléments de données de contenu mémorisés.

25. Programme informatique ou suite de programmes informatiques, comprenant des moyens de code informatique aptes à effectuer les étapes du procédé selon l'une quelconque des revendications 1 à 16 lorsque ledit programme est exécuté sur un ordinateur ou sur une suite d'ordinateurs.

26. Support lisible par ordinateur comprenant le programme informatique selon la revendication 25.
